# EUROPÄISCHE PATENTSCHRIFT

(11) **EP 3 308 043 B1**
(45) Veröffentlichungstag und Bekanntmachung des Hinweises auf die Patenterteilung: **10.08.2022**
(21) Anmeldenummer: 16750091.7
(22) Anmeldetag: 08.06.2016
(51) Int. Cl.: F16C 19/16, F16C 33/64, B21K 1/04, B23P 13/00

(54) **SCHRÄGKUGELLAGER MIT KALTUMGEFORMTEM LAGERRING SOWIE VERFAHREN ZUR FERTIGUNG EINES LAGERRINGS DES SCHRÄGKUGELLAGERS**
ANGULAR CONTACT BALL BEARING WITH COLD FORMED BEARING RING AS WELL AS METHOD OF MANUFACTURE A BEARING RING OF AN ANGULAR CONTACT BALL BEARING
ROULEMENT À CONTACT OBLIQUE AVEC BAGUE DE ROULEMENT FABRIQUÉE PAR FORMAGE À FROID ET PROCÉDÉ DE FABRICATION UN BAGUE D'UN ROULEMENT À CONTACT OBLIQUE

(30) Priorität: 12.06.2015 DE 102015210765
(43) Veröffentlichungstag der Anmeldung: 18.04.2018
(73) Patentinhaber: Schaeffler Technologies AG & Co. KG, 91074 Herzogenaurach (DE)
(72) Erfinder: KICK-RODENBÜCHER, Reinhard, 90455 Nürnberg (DE); EIDLOTH, Rainer, 91074 Herzogenaurach (DE); MANTAU, Markus, 90617 Puschendorf (DE)
(86) Internationale Anmeldenummer: PCT/DE2016/200266
(87) Internationale Veröffentlichungsnummer: WO 2016/198069

(56) Entgegenhaltungen:
- AT-B- 185 664
- DE-A1-102010 022 315
- DE-A1-102012 206 441
- DE-A1-102013 215 871
- DE-C- 867 777

## Beschreibung

Die Erfindung betrifft ein Schrägkugelwälzlager mit einem Innenring, wobei der Innenring eine Außenlaufbahn aufweist, mit einem Außenring, wobei der Außenring eine Innenlaufbahn aufweist, sowie mit einer Mehrzahl von Kugeln als Wälzkörper, wobei die Kugeln zwischen der Innenlaufbahn und der Außenlaufbahn angeordnet sind. Die Erfindung betrifft auch ein Verfahren zur Fertigung des Innenrings und/oder des Außenrings des Schrägkugelwälzlagers.

Schräglager mit Kugeln als Wälzkörper werden eingesetzt, wenn die Lager keine ausschließlich radiale Belastung, sondern eine radial-axiale Belastung ableiten müssen. Gegenüber Kegelrollenlagern weisen die Schräglager mit Kugeln als Wälzkörper den Vorteil auf, dass die Reibung geringer ausfällt, dagegen ist die Tragfähigkeit niedriger.

Die Laufbahnen für die Kugeln müssen relativ zu der Druckübertragungsrichtung ausgerichtet sein. Dies führt dazu, dass Ringe von Schräglagern in deren axialen Verlauf mit Bezug auf die radiale Ausdehnung einen schmalen und einen breiten Abschnitt aufweisen, welche ineinander übergehen, wobei in dem Übergang die Laufbahn für die Kugeln angeordnet ist.

Die Ringe des Schräglagers sind üblicherweise als Massivringe ausgebildet, also aus einem Vollmaterial als Halbzeug trennend oder abtragend gefertigt. Diese Art der Fertigung führt zu niedrigen Fertigungstoleranzen, ist jedoch aufgrund des Fertigungsverfahrens und aufgrund des benötigten, massiven Halbzeugs vergleichsweise teuer.

Die Druckschrift DE 10 2012 206 441 A1 offenbart als Gegenstand ein Planetenraddifferential, wobei sich ein Planetenträger des Planetenraddifferentials über Wälzlager gegenüber einem Gehäuse abstützt und wobei das Wälzlager als ein Schräglager mit Kugeln als Wälzkörper ausgebildet ist. Aus der Beschreibung ergibt sich, dass der Lageraußenring des Wälzlagers gezogen und der Lagerinnenring des Wälzlagers fließgepresst ausgeführt sein kann.

Die Druckschrift AT 185 664 B offenbart ein gattungsgemäßes Schrägkugelwälzlager sowie ein Verfahren zur gleichzeitigen spanlosen Herstellung des äußeren und inneren Lagerrings des Wälzlager. Weiterhin offenbart diese Druckschrift die Herstellung von Lagerringen im Fließpressverfahren.

Es ist Aufgabe der Erfindung, ein Schrägkugelwälzlager vorzuschlagen, welches kostengünstig herstellbar ist und zugleich gute funktionale Eigenschaften aufweist. Diese Aufgabe wird durch ein Schrägkugelwälzlager mit den Merkmalen des Anspruchs 1 sowie durch ein Verfahren zur Fertigung des Schrägkugelwälzlagers mit den Merkmalen des Anspruchs 4 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Schrägkugelwälzlager, welches insbesondere als ein Radialwälzlager ausgebildet ist. Das Schrägkugelwälzlager weist zwei Lagerringe auf, wobei einer der Lagerringe als ein Innenring ausgebildet ist, wobei der Innenring eine Außenlaufbahn aufweist. Die Außenlaufbahn wird durch eine Oberfläche des Innenrings, insbesondere des Grundmaterials des Innenrings, gebildet. Alternativ oder ergänzend ist die Außenlaufbahn integral zu oder in dem Innenring ausgebildet. Der andere Lagerring ist als ein Außenring ausgebildet. Der Außenring ist koaxial und vorzugsweise konzentrisch zu dem Innenring angeordnet. Der Außenring weist eine Innenlaufbahn auf, wobei die Innenlaufbahn durch eine Oberfläche des Außenrings, insbesondere durch das Grundmaterial des Außenrings, gebildet ist. Besonders bevorzugt ist die Innenlaufbahn integral zu oder in dem Außenring ausgebildet. Das Grundmaterial des Innenrings und/oder des Außenrings ist Metall, vorzugsweise Stahl.

Das Schrägkugelwälzlager weist eine Mehrzahl von Kugeln als Wälzkörper auf. Vorzugsweise ist das Schrägkugelwälzlager einreihig ausgebildet, kann aber auch mehrreihig ausgeführt sein. Die Kugeln sind abwälzend zwischen der Innenlaufbahn und der Außenlaufbahn angeordnet, sodass die Kugeln bei einer Belastung zugleich die Innenlaufbahn und die Außenlaufbahn kontaktieren.

Im Rahmen der Erfindung wird vorgeschlagen, dass die Außenlaufbahn durch ein Fließpressen des Innenrings und und/odor die Innenlaufbahn durch ein Fließpressen des Außenrings gebildet ist.

Es erfolgt mittels des Fließpressens eine spanlose Ausbildung des Innenrings und des Außenrings in Endkontur.

Beim Fließpressen ist die Temperatur in dem Werkstück, in diesem Fall der Innenring und der Außenring, beziehungsweise ein vorhergehender Lagerringrohling, niedriger als die Rekristallisationstemperatur des Grundmaterials des Werkstücks. Insbesondere wird bei dem Fließpressen der Lagerringrohling bei Umgebungs- oder Raumtemperatur, vorzugsweise bei einer Temperatur von < 50 Grad, dem Fließpressvorgang zugeführt. Während des Umformens ist es jedoch möglich, dass höhere Temperaturen aufgrund der Umformarbeit in dem Lagerringrohling beziehungsweise in dem dann entstehenden Lagerring auftreten, wobei jedoch auch die höheren Temperaturen unter der Rekristallisationstemperatur des Grundmaterials liegen. Es ist von Vorteil, dass durch das Fließpressen Oberflächenspannungen in dem Lagerring im Bereich der Laufbahn erzeugt werden, die zu einer Leistungssteigerung führen. Zudem ist es von Vorteil, dass das Fertigungsverfahren des Fließpressens gerade bei hohen Stückzahlen sehr kostengünstig durchgeführt werden kann. Insgesamt ist das Schrägkugelwälzlager damit kostengünstig herstellbar und weist gute Funktionseigenschaften auf.

Es ist besonders bevorzugt, dass das Schrägkugelwälzlager einen Druckwinkel von mindestens 10 Grad, vorzugsweise von mindestens 15 Grad, und/oder von weniger als 45 Grad, vorzugsweise von weniger als 40 Grad, ausbildet. Der Druckwinkel wird relativ zu einer Ebene gemessen, welche senkrecht zu der Hauptachse des Schrägkugelwälzlagers ausgerichtet ist. Der Druckwinkel beschreibt die Richtung, in der eine Belastung von einem Lagerring zu dem anderen Lagerring bestimmungsgemäß übergeleitet werden kann.

Erfindungsgemäß sind die Lagerringe in einem Längsschnitt längs einer Hauptdrehachse des Schrägkugelwälzlagers vorzugsweise wie folgt ausgebildet:
Der Innenring weist einen Schenkelabschnitt und einen Schulterabschnitt auf, welche einstückig, integral und/oder einmaterialig miteinander ausgebildet sind. Insbesondere sind diese aus dem gleichen Grundmaterialabschnitt gefertigt, insbesondere geformt. Die Innenlaufbahn ist an dem Übergang zwischen dem Schenkelabschnitt und dem Schulterabschnitt angeordnet. Bezogen auf die radiale Breite ist der Innenring im Bereich des Schulterabschnitts breiter als im Bereich des Schenkelabschnitts. Für die Kugel als Wälzkörper ergibt sich in dem Längsschnitt eine Oberflächenkontur, welche zunächst parallel oder konisch zu der Hauptdrehachse im Bereich des Schenkelabschnitts verläuft und nachfolgend von der Hauptdrehachse weggekrümmt ist, um die Außenlaufbahn zu bilden. Dieser Bereich wird durch den Schulterabschnitt gebildet oder mit gebildet.

Alternativ oder ergänzend weist der Außenring ebenfalls einen Schenkelabschnitt und einen Schulterabschnitt auf, wobei die Innenlaufbahn an dem Übergang zwischen dem Schenkelabschnitt und dem Schulterabschnitt angeordnet ist. Bei dem Außenring verläuft die Oberflächenkontur in dem Längsschnitt zunächst parallel, konisch oder leicht ansteigend zu der Hauptdrehachse und ist nachfolgend zu der Hauptdrehachse hin gekrümmt, um die Innenlaufbahn zu bilden.

Bei dem Lagerring ist somit der Schenkelabschnitt in radialer Erstreckung schmaler ausgebildet als der Schulterabschnitt.

Erfindungsgemäß ist vorgesehen, dass in mindestens einem der Schulterabschnitte ein umlaufender Kehlbereich eingeformt ist. Der Kehlbereich ist durch das Fließpressen in den Schulterabschnitt eingeformt. Der Kehlbereich umläuft die Hauptdrehachse. Der Kehlbereich ist an dem Schulterabschnitt auf einer der Laufbahn abgewandten Seite eingebracht. Durch den Kehlbereich wird ein umlaufender Stegbereich an dem Schulterabschnitt ausgebildet. Das Schrägkugelwälzlager weist einen Käfig zur Führung der Kugeln auf, wobei der Käfig Halteorgane umfasst, welche den Stegbereich umgreifen und in den Kehlbereich eingreifen, sodass eine Verliersicherung in axialer Richtung für den Käfig gebildet ist. Der Käfig kann als ein Kunststoffkäfig ausgebildet sein, alternativ ist der Käfig als ein Blechkäfig realisiert. Durch das Einbringen des Kehlbereichs und/oder Ausformen des Stegbereichs wird in den jeweiligen Lagerring eine weitere Funktion, nämlich eine Verliersicherung für den Käfig, integriert. Der Kehlbereich kann wahlweise in den Innenring oder in den Außenring eingebracht sein.

Bei einer besonders bevorzugten Ausgestaltung der Erfindung sind die Halteorgane des Käfigs als Haltekrallen ausgebildet. Die Haltekrallen sind in Umlaufrichtung um die Hauptdrehachse insbesondere voneinander beabstandet und/oder regelmäßig verteilt. Die Halteorgane, insbesondere die Haltekrallen, verlaufen in axialer Richtung über den Stegbereich und tauchen mit einem freien Endbereich in radialer Richtung in den Kehlbereich ein, sodass der Käfig in axialer Richtung, weggerichtet von dem Schulterabschnitt, formschlüssig verliergesichert ist.

Ein weiterer Gegenstand der Erfindung betrifft ein Verfahren zur Fertigung des erfindungsgemäßen Schrägkugelwälzlagers, das zwei fließgepresste Lagerringe aufweist.

In einem Hauptumformschritt wird ein Lagerringrohling durch Fließpressen kalt umgeformt, sodass der jeweilige Lagerring entsteht. Durch den Hauptumformschritt wird die Laufbahn des jeweiligen Lagerrings gebildet. Durch das erfindungsgemäße Verfahren wird eine spanlose Fertigung in Endkontur oder Endform (net-shape-manufacturing), im Speziellen von der Laufbahn, ermöglicht.

Bei einer bevorzugten Ausgestaltung der Erfindung ist der Lagerringrohling in Form eines geraden Hohlzylinders ausgebildet. Es kann vorgesehen sein, dass der Lagerringrohling aus einer Kreisringscheibe als Vorprodukt durch einen Vorumformschritt gefertigt ist. In dem Vorumformschritt wird die Kreisringscheibe, insbesondere die ebene oder flache Kreisringscheibe, durch den Vorumformschritt umgeklappt und in der Form entsprechend verändert, sodass der Lagerringrohling entsteht.

Bei Weiterbildungen der Erfindung ist das Vorprodukt, insbesondere die Kreisringscheibe, für den Innenring und das Vorprodukt, insbesondere die Kreisringscheibe, für den Außenring aus einer Metallronde gefertigt. Insbesondere ist das Vorprodukt für den Innenring aus dem Mittelteil des Vorprodukts für den Außenring gebildet, sodass als Grundmaterial für beide Lagerringe nur eine gemeinsame Ronde benötigt wird. Damit werden die Vorprodukte im Rahmen einer Mutter-Kind-Fertigung und/oder oder als koaxiale und konzentrische Kreisringe kostengünstig hergestellt.

Weitere Merkmale, Vorteile und Wirkungen der Erfindung ergeben sich aus der nachfolgenden Beschreibung bevorzugter Ausführungsbeispiele der Erfindung sowie der beigefügten Figuren. Dabei zeigen:
Figur 1a, 1b jeweils ein Schrägkugelwälzlager als Ausführungsbeispiele der Erfindung im Schnittbild;
Figur 2 eine Illustration zur Fertigung der Lagerringe für die Schrägkugelwälzlager in den vorhergehenden Figuren;
Figur 3 eine teilgeschnittene, dreidimensionale Explosionsdarstellung eines Schrägkugelwälzlagers als ein weiteres Ausführungsbeispiel der Erfindung;
Figur 4 in gleicher Darstellung wie in der Figur 3 ein weiteres Ausführungsbeispiel für ein Schrägkugelwälzlager;

Einander entsprechende oder gleiche Teile oder Bereiche sind in den Figuren mit einander entsprechenden oder gleichen Bezugszeichen versehen.

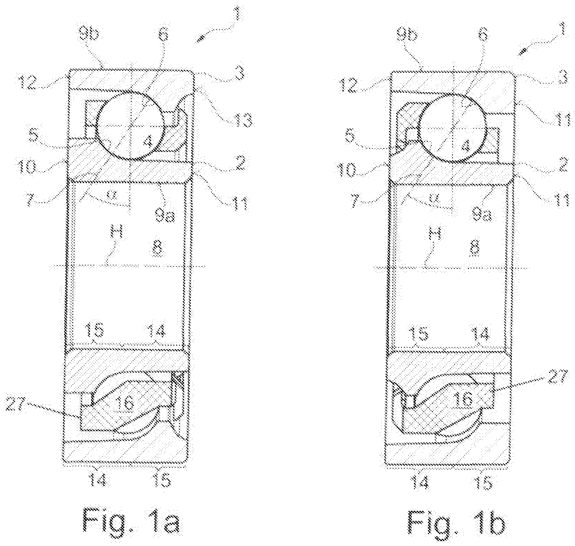

Die Figuren 1a und 1b zeigen jeweils in einem schematischen Längsschnitt ein Schrägkugelwälzlager 1 als ein Ausführungsbeispiel der Erfindung. Das Schrägkugelwälzlager 1 weist einen Innenring 2 sowie einen Außenring 3 auf, welche koaxial und konzentrisch zueinander und zu einer Hauptdrehachse H angeordnet sind. Zwischen dem Innenring 2 und dem Außenring 3 als Lagerringe sind eine Reihe Kugeln 4 als Wälzkörper in einem Käfig 27 angeordnet.

Die Kugeln 4 laufen an dem Innenring 2 an einer Außenlaufbahn 5 und an dem Außenring 3 an einer Innenlaufbahn 6 ab. Die Außenlaufbahn 5 ist durch ein Grundmaterial des Innenrings 2 gebildet und/oder ist integral mit dem Innenring 2 ausgeführt. Die Innenlaufbahn 6 des Außenrings 3 ist durch ein Grundmaterial des Außenrings 3 und/oder integral mit dem Außenring 3 ausgebildet. Außenlaufbahn 5 und Innenlaufbahn 6 sind so angeordnet, dass sich ein Druckwinkel α für die Drucklinien 7 ergibt, über die Belastungen von dem einen Lagerring zu dem anderen Lagerring übergeleitet werden. Der Druckwinkel α wird gegenüber einer Ebene bestimmt, die senkrecht zu der Hauptdrehachse H angeordnet ist und beträgt in dem vorliegenden Beispiel ca. 30 Grad.

Der Innenring 2 weist eine Durchgangsöffnung 8 auf, durch die eine Welle oder Achse durchgesteckt werden kann. Die Durchgangsöffnung 8 ist in radialer Richtung zu der Hauptdrehachse H durch eine zylinderförmige Fläche 9a des Innenrings 2 begrenzt. Der Außenring 3 weist an seiner radial äußeren Seite eine zylinderförmige Fläche 9b auf, welche eine Anlagefläche zur Anlage des Außenrings 3 in einer Tragstruktur bildet. In axialer Richtung ist der Innenring 2 durch eine erste Stirnseite 10 und eine zweite Stirnseite 11 sowie der Außenring 3 durch eine erste äußere Stirnseite 12 und eine zweite äußere Stirnseite 13 begrenzt.

Der Innenring 2 und der Außenring 3 weisen als Lagerringe in dem gezeigten Längsschnitt jeweils einen Schenkelabschnitt 14 und einen Schulterabschnitt 15 auf. Die Dicke der Lagerringe an dem Schenkelabschnitt 14 in radialer Richtung zu der Hauptdrehachse H ist kleiner als die Dicke in dem Schulterabschnitt 15. In dem Übergang von dem Schenkelabschnitt 14 zu dem Schulterabschnitt 15 ist die Laufbahn des Lagerrings, somit die Außenlaufbahn 5 beziehungsweise die Innenlaufbahn 6, angeordnet. Die dem Wälzkörperraum 16 zugewandte Kontur der Lagerringe ist im Schenkelabschnitt 14 parallel oder konisch zur Hauptdrehachse H beziehungsweise in den Wälzkörperraum 16 vom freien Rand her ansteigend und geht dann über in die Laufbahn, insbesondere die Außenlaufbahn 5 beziehungsweise die Innenlaufbahn 6. Der Innenring 2 und der Außenring 3 sind jeweils einstückig geformt.

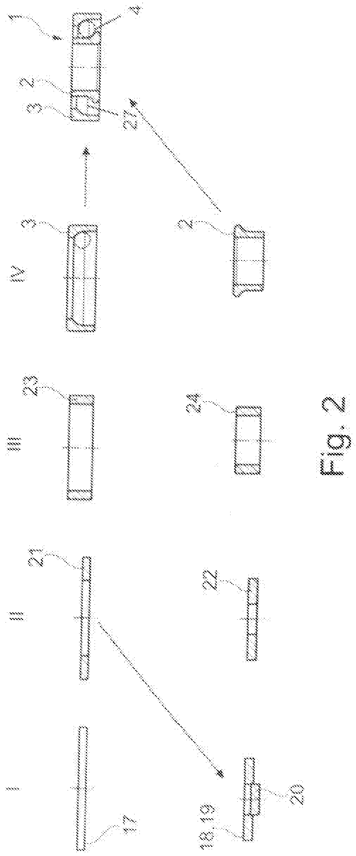

In der Figur 2 ist eine Illustration zur Beschreibung eines Verfahrens zur Fertigung der Lagerringe, insbesondere des Innenrings 2 und des Außenrings 3, im Schnittbild dargestellt:
In einem Schritt I wird ausgehend von einer Metallronde 17 ein Mittelteil 18 ausgetrennt. Das Mittelteil 18 bildet eine weitere, kleinere Metallronde 19. Aus der kleineren Metallronde 19 wird ein Mittelteil 20 ausgetrennt.

In einem Schritt II liegt sowohl für den Innenring 2 als auch für den Außenring 3 eine flache Kreisringscheibe 21 beziehungsweise 22 vor.

In einem Schritt III wird die Kreisringscheibe 21, 22 in einen Lagerringrohling 23, 24 umgeformt. Die Kreisringscheibe 21, 22 bildet ein Vorprodukt in der Fertigung des Innenrings 2 beziehungsweise des Außenrings 3. Der Lagerringrohling 23, 24 bildet die Grundlage für den Innenring 2 beziehungsweise den Außenring 3. Der Schritt III wird auch als Vorumformschritt bezeichnet.

In einem Schritt IV, der auch als Hauptumformschritt bezeichnet werden kann, wird der Lagerringrohling 23, 24 fließgepresst. Dabei erfolgt die Umformung mit einer Temperatur, die unterhalb der Rekristallisationstemperatur des Lagerringrohlings 23, 24 beziehungsweise des Innenrings 2 beziehungsweise des Außenrings 3 liegt. Bei dem Hauptumformschritt erfolgt eine Materialverschiebung derart, dass der gegenüber dem Schenkelabschnitt 14 verbreiterte Schulterabschnitt 15 (vergleiche Figuren 1a und 1b) gebildet wird.

In einem Schritt V wird der Innenring 2 und der Außenring 3 mit dem Käfig 27 und den Kugeln 4 zu dem Schrägkugelwälzlager 1 zusammengesetzt.

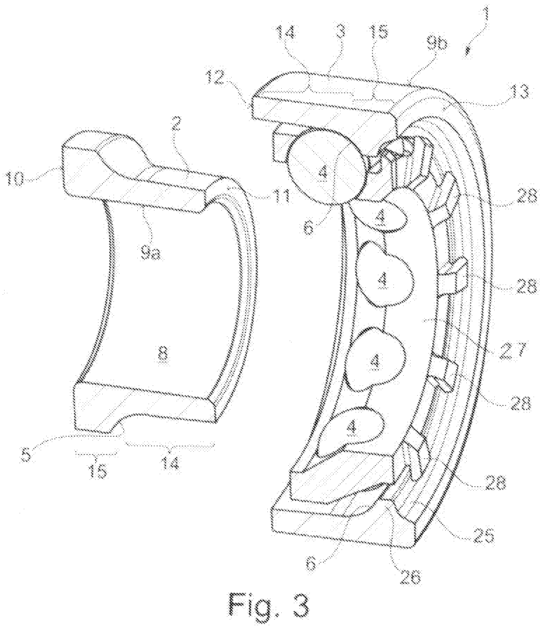

In der Figur 3 ist das Schrägkugelwälzlager 1 in einer teilgeschnittenen, dreidimensionalen Darstellung gezeigt. Der Innenring 2 weist, wie bereits beschrieben, den Schenkelabschnitt 14 und den Schulterabschnitt 15 auf. Bei dem Außenring 3 ist zu erkennen, dass der Schulterabschnitt 15 an der radial inneren Seite einen eingeformten Kehlbereich 25 aufweist, welcher umlaufend zu der Hauptdrehachse H (vergleiche Figur 1a) angeordnet ist. Durch den in radialer Richtung nach außen versetzten Kehlbereich 25 ist ein Stegbereich 26 gebildet, auf dessen einer Seite die Innenlaufbahn 6 und auf dessen anderer Seite der Kehlbereich 25 angeordnet ist.

Das Schrägkugelwälzlager 1 weist einen Käfig 27 auf, in dem die Kugeln 4 voneinander beabstandet geführt sind. Der Käfig 27 weist auf seiner axialen Außenseite eine Mehrzahl von Haltekrallen 28 auf, welche Halteorgane des Käfigs 27 darstellen. Die Haltekrallen 28 sind an dem Käfig 27 derart angeformt, dass diese den Stegbereich 26 in axialer Richtung übergreifen und sind in radialer Richtung so lang bemessen, dass diese den Stegbereich 26 hintergreifen. Auf diese Weise kann der Käfig 27 und damit die Kugeln 4 selbst bei ausgebautem Innenring 2 in axialer Richtung zu der Hauptdrehachse H nicht herausfallen. In einer ersten axialen Richtung ist der Käfig 27 mit den Kugeln 4 durch die Innenlaufbahn 6 von einem Herausfallen formschlüssig gesperrt. In der Gegenrichtung sind die Haltekrallen 28 hinter dem Stegbereich 26 so angeordnet, dass diese ein axiales Verschieben des Käfigs 27 mit den Kugeln 4 formschlüssig verhindern. Diese Art der formschlüssigen Verliersicherung mit den Halteorganen ist auch in der Figur 1a dargestellt.

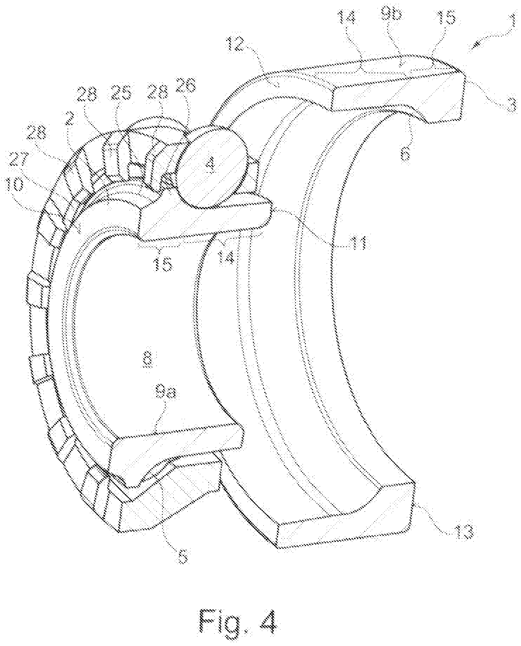

Die Figur 4 zeigt eine alternative Ausgestaltung, welche auch der Ausgestaltung in der Figur 1b entspricht. In der Ausgestaltung in der Figur 4 ist der Kehlbereich 25 und daraus folgend der Stegbereich 26 an dem Schulterabschnitt 15 des Innenrings 2 angeordnet. Die Haltekrallen 28 als Halteorgane des Käfigs 27 umgreifen den Stegbereich 26 radial nach innen, sodass der Käfig 27 in axialer Richtung zum einen durch die Innenlaufbahn 5 und in die andere axiale Richtung durch die den Stegbereich 26 übergreifend und hintergreifend angeordneten Haltekrallen 28 formschlüssig gesichert ist. Der Kehlbereich 25 wird während des Hauptumformschritts/Schritts IV in den Innenring 2 beziehungsweise Außenring 3 eingebracht.

### Bezugszeichenliste

- 1: Schrägkugelwälzlager
- 2: Innenring
- 3: Außenring
- 4: Kugeln
- 5: Außenlaufbahn
- 6: Innenlaufbahn
- 7: Drucklinie
- 8: Durchgangsöffnung
- 9a,b: zylinderförmige Fläche
- 10: erste Stirnseite
- 11: zweite Stirnseite
- 12: erste äußere Stirnseite
- 13: zweite äußere Stirnseite
- 14: Schenkelabschnitt
- 15: Schulterabschnitt
- 16: Wälzkörperraum
- 17: Metallronde
- 18: Mittelteil
- 19: Metallronde
- 20: Mittelteil
- 21: Kreisringscheibe
- 22: Kreisringscheibe
- 23: Lagerrohling
- 24: Lagerrohling
- 25: Kehlbereich
- 26: Stegbereich
- 27: Käfig
- 28: Haltekrallen
- α: Druckwinkel
- H: Hauptdrehachse

## Patentansprüche

1. Schrägkugelwälzlager (1) mit einem Innenring (2), wobei der Innenring (2) eine Außenlaufbahn (5) aufweist, mit einem Außenring (3), wobei der Außenring (3) eine Innenlaufbahn (6) aufweist, mit einer Mehrzahl von Kugeln (4) als Wälzkörper, wobei die Kugeln (4) zwischen der Außenlaufbahn (5) und der Innenlaufbahn (6) angeordnet sind, wobei,
die Außenlaufbahn (5) durch ein Fließpressen des Innenrings (2) und die Innenlaufbahn (6) durch ein Fließpressen des Außenrings (3) spanlos in Endkontur gebildet ist, wobei in einem Längsschnitt längs einer Hauptdrehachse (H) der Innenring (2) einen Schenkelabschnitt (14) und einen Schulterabschnitt (15) aufweist, wobei die Außenlaufbahn (5) an dem Übergang zwischen dem Schenkelabschnitt (14) und dem Schulterabschnitt (15) angeordnet ist und/oder der Außenring (3) einen Schenkelabschnitt (14) und einen Schulterabschnitt (15) aufweist, wobei die Innenlaufbahn (6) an dem Übergang zwischen dem Schenkelabschnitt (14) und dem Schulterabschnitt (15) angeordnet ist,
**dadurch gekennzeichnet, dass** in mindestens einem der Schulterabschnitte (15) ein umlaufender Kehlbereich (25) durch das Fließpressen eingeformt ist, so dass zwischen der benachbarten Außenlaufbahn (5) bzw. Innenlaufbahn (6) und dem Kehlbereich (25) ein umlaufender Stegbereich (26) ausgebildet ist und dass das Schrägkugelwälzlager (1) einen Käfig (27) zur Führung der Kugeln (4) aufweist, wobei der Käfig (27) Halteorgane (28) aufweist, wobei die Halteorgane (28) den Stegbereich (26) umgreifen, so dass eine Verliersicherung in axialer Richtung für den Käfig (27) gebildet ist.

2. Schrägkugelwälzlager (1) nach Anspruch 1, **dadurch gekennzeichnet, dass** das Schrägkugelwälzlager (1) einen Druckwinkel (alpha) von mindestens 10 Grad, vorzugsweise von mindestens 15 Grad und/oder von weniger als 45 Grad, vorzugsweise von weniger als 40 Grad, ausbildet.

3. Schrägkugelwälzlager (1) nach Anspruch 1 oder 2, **dadurch gekennzeichnet, dass** die Halteorgane des Käfigs als Haltekrallen (28) ausgebildet sind.

4. Verfahren zur Fertigung eines Schrägkugelwälzlagers (1) nach einem der vorhergehenden Ansprüche, mit Lagerringen (2,3) mit je einer Laufbahn (5,6), wobei einer der Lagerringe (2,3) mit der Laufbahn (5,6) als der Innenring (2) mit der Außenlaufbahn (5) und einer der Lagerringe (2,3) mit der Laufbahn (5,6) als der Außenring (3) mit der Innenlaufbahn (6) ausgebildet wird,
wobei in einem Hauptumformschritt ein Lagerringrohling in den jeweiligen Lagerring (2,3) kalt umgeformt wird, wobei die Außenlaufbahn (5), die Innenlaufbahn ( 6) und der Kehlbereich (25) (5,6) durch Fließpressen geformt werden.

5. Verfahren nach Anspruch 4, **dadurch gekennzeichnet, dass** der Lagerringrohling (23, 24) aus einer Kreisringscheibe (21,22) als Vorprodukt durch einen Vorumformschritt gefertigt ist.

6. Verfahren nach Anspruch 5, **dadurch gekennzeichnet, dass** das die Kreisringscheibe (21) als das Vorprodukt für den Außenring (3) und die Kreisringscheibe (22) als Vorprodukt für den Innenring (2) aus einer Metallronde (17,19) gebildet sind.

## Claims

1. An angular contact ball bearing (1) having an inner ring (2), wherein the inner ring (2) has an outer raceway (5), having an outer ring (3), wherein the outer ring (3) has an inner raceway (6), having a plurality of balls (4) as rolling elements, wherein the balls (4) are arranged between the outer raceway (5) and the inner raceway (6), wherein the outer raceway (5) is formed by extruding the inner ring (2) and the inner raceway (6) is formed by extruding the outer ring (3) in the final contour without cutting, wherein the inner ring (2) has a leg portion (14) and a shoulder portion (15) in a longitudinal section along a main axis of rotation (H), wherein the outer raceway (5) is arranged at the transition between the leg portion (14) and the shoulder portion (15) and/or the outer ring (3) has a leg portion (14) and a shoulder portion (15), wherein the inner raceway (6) is arranged at the transition between the leg portion (14) and the shoulder portion (15), **characterised in that** a circumferential channel area (25) is formed by extrusion in at least one of the shoulder portions (15), so that a circumferential web area (26) is formed between the adjacent outer raceway (5) or inner raceway (6) and the channel area (25) and **in that** the angular contact ball bearing (1) has a cage (27) for guiding the balls (4), wherein the cage (27) has retaining elements (28), wherein the retaining elements (28) grip around the web area (26), so that a captive fastener is formed for the cage (27) in an axial direction.

2. The angular contact ball bearing (1) according to claim 1, **characterised in that** the angular contact ball bearing (1) forms a contact angle (alpha) of at least 10 degrees, preferably at least 15 degrees and/or less than 45 degrees, preferably less than 40 degrees.

3. The angular contact ball bearing (1) according to claim 1 or 2, **characterised in that** the retaining elements of the cage are designed as retaining claws (28).

4. A method for manufacturing an angular contact ball bearing (1) according to any one of the preceding claims, having bearing rings (2, 3), each with a raceway (5, 6), wherein one of the bearing rings (2,3) with the raceway (5, 6) is designed as the inner ring (2) with the outer raceway (5) and one of the bearing rings (2, 3) with the raceway (5, 6) is designed as the outer ring (3) with the inner raceway (6), wherein in a main forming step a bearing ring blank is cold-formed into the respective bearing ring (2, 3), wherein the outer raceway (5), the inner raceway (6) and the channel are (25) (5, 6) are formed by extrusion.

5. The method according to claim 4, **characterised in that** the bearing ring blank (23, 24) is manufactured from an annular ring disc (21, 22) as a preliminary product by means of a preforming step.

6. The method according to claim 5, **characterised in that** the annular ring disc (21) as the preliminary product for the outer ring (3) and the annular ring disc (22) as the preliminary product for the inner ring (2) are formed from a metal blank (17, 19).

## Revendications

1. Roulement à contact oblique (1) avec une bague intérieure (2), la bague intérieure (2) comportant une voie de roulement extérieure (5), avec une bague extérieure (3), la bague extérieure (3) comportant une voie de roulement intérieure (6), avec une pluralité de billes (4) faisant office de corps de roulement, les billes (4) étant agencées entre la voie de roulement extérieure (5) et la voie de roulement intérieure (6), la voie de roulement extérieure (5) étant formée par extrusion de la bague intérieure (2) et la voie de roulement intérieure (6) étant formée par extrusion de la bague extérieure (3) dans son contour final sans découpe, la bague intérieure (2) comportant une section de patte (14) et une section d'épaulement (15) dans une coupe longitudinale le long d'un axe de rotation principal (H), la voie de roulement extérieure (5) étant agencée au niveau de la transition entre la section de patte (14) et la section d'épaulement (15) et/ou la bague extérieure (3) comportant une section de patte (14) et une section d'épaulement (15), la voie de roulement intérieure (6) étant agencée au niveau de la transition entre la section de patte (14) et la section d'épaulement (15), **caractérisé en ce que** dans au moins l'une des sections d'épaulement (15), une zone de gorge circonférentielle (25) est formée par extrusion, de sorte qu'entre la voie de roulement extérieure (5) ou la voie de roulement intérieure (6) adjacente et la zone de gorge (25), une zone d'âme circonférentielle (26) soit formée et **en ce que** le roulement à contact oblique (1) présente une cage (27) pour le guidage des billes (4), la cage (27) comportant des éléments de retenue (28), les éléments de retenue (28) entourant la zone d'âme (26), de sorte qu'un blocage dans la direction axiale pour la cage (27) soit formé.

2. Roulement à contact oblique (1) selon la revendication 1, **caractérisé en ce que** le roulement à contact oblique (1) forme un angle de contact (alpha) d'au moins 10 degrés, de préférence d'au moins 15 degrés et/ou inférieur à 45 degrés, de préférence inférieur à 40 degrés.

3. Roulement à contact oblique (1) selon la revendication 1 ou 2, **caractérisé en ce que** les éléments de retenue de la cage sont réalisés sous forme de griffes de retenue (28).

4. Procédé de fabrication d'un roulement à contact oblique (1) selon l'une quelconque des revendications précédentes, avec des bagues de roulement (2, 3) chacune avec une voie de roulement (5, 6), dans lequel l'une des bagues de roulement (2, 3) avec la voie de roulement (5, 6) est formée comme la bague intérieure (2) avec la voie de roulement extérieure (5) et l'une des bagues de roulement (2, 3) avec la voie de roulement (5, 6) est formée comme la bague extérieure (3) avec la voie de roulement intérieure (6), dans une étape de formage principale, une ébauche de bague de roulement étant formée à froid en la bague de roulement respective (2, 3), la voie de roulement extérieure (5), la voie de roulement intérieure (6) et la zone de gorge (25) (5,6) étant formées par extrusion.

5. Procédé selon la revendication 4, **caractérisé en ce que** l'ébauche de bague de roulement (23, 24) est fabriquée à partir d'un disque circulaire (21, 22) en tant que produit préliminaire au moyen d'une étape de formage préliminaire.

6. Procédé selon la revendication 5, **caractérisé en ce que** le disque circulaire (21) en tant que produit préliminaire pour la bague extérieure (3) et le disque annulaire circulaire (22) en tant que produit préliminaire pour la bague intérieure (2) sont formés à partir d'un flan métallique (17, 19).
